# EUROPÄISCHE PATENTANMELDUNG

(11) **EP 0 648 795 A1**
(43) Veröffentlichungstag der Anmeldung: **19.04.1995**
(21) Anmeldenummer: 94115931.1
(22) Anmeldetag: 10.10.1994
(51) Int. Cl.: C08G 73/10, C09D 179/08

(54) **Lösungen polyimidbildender Substanzen und deren Verwendung als Beschichtungszusammensetzungen**

(30) Priorität: 18.10.1993 DE 4335322
(71) Anmelder: BASF Lacke + Farben AG, D-48165 Münster-Hiltrup (DE)
(72) Erfinder: Blum, Rainer, D-67069 Ludwigshafen (DE); Hoffmann, Gerhard, Dr., D-67166 Otterstadt (DE)
(74) Vertreter: Langfinger, Klaus-Dieter, Dr.

(57) **Zusammenfassung**

Lösungen polyimidbildender Substanzen, enthaltend
A) aromatische oder teilaromatische Polyamine, und
B) Amide oder Gemische von Estern und Amiden von Tetracarbonsäuren.

## Beschreibung

Die vorliegende Erfindung betrifft Lösungen polyimidbildender Substanzen, enthaltend
A) aromatische oder teilaromatische Polyamine und
B) Amide oder Gemische von Estern und Amiden von aromatischen oder teilaromatischen Tetracarbonsäuren.

Weiterhin betrifft die Erfindung die Verwendung solcher Lösungen zur Herstellung von Überzügen und mit Polyimiden beschichtete Gegenstände und beschichtete Gegenstände.

Aromatische Polyimide sind in der Regel in üblichen organischen Lösungsmitteln unlöslich. Als polyimidbildende Lacke wurden daher im allgemeinen Lösungen der besser löslichen Polyamidocarbonsäuren als polyimidbildende Vorstufen eingesetzt. Aus diesen Vorstufen bilden sich dann bei der Trocknung, bei der Temperaturen bis 400°C angewandt werden, die Polyimide.

Nachteilig an den polyimidbildenden Polyamidocarbonsäure-Lacken sind ihre, im Verhältnis zum Feststoffgehalt, sehr hohen Viskositäten. Dies erschwert ihre Verarbeitung und erfordert starke Verdünnungen.

Erhebliche Nachteile ergeben sich dabei bei Anwendungen in der Mikroelektroniken, wo Polyamidsäurelacke als Planarisierungsschichten in den mikroelektronischen Strukturen eingesetzt werden, wobei für gute Planarisierung hohe Konzentrationen in Verbindung mit niedrigen Viskositäten erforderlich sind.

Weiterhin sind Polyamidocarbonsäuren schlecht lagerstabil, da sie zur Selbstverseifung und vorzeitiger Imidisierung neigen. Bei den meisten Polyamidocarbonsäuren-Lacken ist deshalb Tiefkühllagerung erforderlich.

Um diesen Nachteilen abzuhelfen wurde schon versucht, Lösungen von monomeren Ausgangsstoffen für die direkte Polyimidbildung einzusetzen.

In der US-A 3,502,712 werden Lösungen spezieller Tetracarbonsäurederivate beschrieben, die aus Benzophenontetracarbonsäure und gesättigten Aminoalkanolen erhalten werden.

Aus der US-A 3,700,649 sind Polyimide bekannt, welche aus aromatischen Diaminen und symmetrischen Diestern der Benzophenontetracarbonsäure erhalten werden.

Weiterhin sind aus der US-A 3,347,808 Lösungen von Polyaminen und Alkylestern von Tetracarbonsäuren bekannt.

Die US-A 4,874,835 betrifft Mischungen spezieller Diamine mit Oxydiphthalsäureestern.

In der US-A 4,960,824 wird beschrieben, daß die Herstellung von Polyimiden über Diester-Vorstufen insofern problematisch sei, als bei zahlreichen Kombinationen von Diestern und Diaminen die Lagerstabilität der Lösungen schlecht sei. Danach sollen nur ganz bestimmte Kombinationen spezieller Diamine und teilaliphatische Tetracarbonsäuren geeignet sein.

Aufgabe der vorliegenden Erfindung war es, verbesserte Lösungen polyimidbildender Substanzen bereitzustellen.

Demgemäß wurden die eingangs definierten Lösungen gefunden.

Die technisch bedeutendsten Polyheterocyclen im Sinne dieser Erfindung sind Polyimide, jedoch werden auch Polyheterocyclen wie Polyisoindolchinazolindione oder Polyarylenbenzimidazole umfaßt. Der Begriff Polyimid wird im folgenden als Synonym für alle Polyheterocyclen verwendet.

Die Einzelkomponenten der Lösungen werden im folgenden beschrieben.

Als Polyamin-Komponenten A) kommen bevorzugt aromatische und/oder teilaromatische Polyamine in Betracht, wobei Diamine bevorzugt sind.

Beispiele für geeignete Diamine sind:
p-Phenylendiamin,
m-Phenylendiamin,
(4,4'-Diaminodiphenyl)-oxid,
(3,3'-Diaminodiphenyl)-oxid,
(3,4'-Diaminodiphenyl)-oxid,
(4,4'-Diaminodiphenyl)-sulfid,
(3,3'-Diaminodiphenyl)-sulfid,
(3,4'-Diaminodiphenyl)-sulfid,
(4,4'-Diaminodiphenyl)-sulfon,
(3,3'-Diaminodiphenyl)-sulfon,
(3,4'-Diaminodiphenyl)-sulfon,
(4,4'-Diaminodiphenyl)-methan,
(3,3'-Diaminodiphenyl)-methan,
(3,4'-Diaminodiphenyl)-methan,
(4,4'-Diaminodiphenyl)-propan,
(3,3'-Diaminodiphenyl)-propan,
(3,4'-Diaminodiphenyl)-propan,
(4,4'-Diaminodiphenyl)-ethan,
(3,3'-Diaminodiphenyl-ethan,
(3,4'-Diaminodiphenyl)-ethan,
4,4'-Bis-(4,4'-aminophenoxy)-biphenyl,
4,4'-Bis-(4,3'-aminophenoxy)-biphenyl,
2,2-Bis[4-(4,4-aminophenoxy)phenyl]-propan,
2,2-Bis[4-(4,4-aminophenoxy)phenyl]-perfluorpropan,
2,2-Bis[4-(3,4-aminophenoxy)phenyl]-propan,
2,2-Bis[4-(3,3'-aminophenoxy)phenyl]-propan,
2,2-Bis[4-(4,4'-aminophenoxy)phenyl]-sulfon,
2,2-Bis[4-(3,4-aminophenoxy)phenyl]-sulfon,
2,2-Bis[4-(3,3'-aminophenoxy)phenyl]-sulfon,
4,4'-Dimethyl-3,3'-diaminodiphenylsulfon,
2,2-Bis[4-(4,4'-aminophenoxy)phenyl]-sulfid,
2,2-Bis[4-(3,4-aminophenoxy)phenyl]-sulfid,
2,2-Bis[4-(3,3'-aminophenoxy)phenyl]-sulfid,
2,2-Bis[4-(4,4'-aminophenoxy)phenyl]-methan,
2,2-Bis[4-(3,4-aminophenoxy)phenyl]-methan,
2,2-Bis[4-(3,3'-aminophenoxy)phenyl]-methan,
1,4-Bis-(4,4'-aminophenoxy)-phenylen,
1,4-Bis-(3,4'-aminophenoxy)-phenylen,
1,4-Bis-(3,3'-aminophenoxy)-phenylen,
4,4'-Diaminodiphenyl(Benzidin),
3,4'-Diaminodiphenyl,3,3'-Diaminodiphenyl,
3,3'-Dimethoxy-4,4'-diaminodiphenyl,
3,3'-Dimethoxy-3,4'-diaminodiphenyl,
3,3'-Dimethyl-4,4'-diaminodiphenyl,
3,3'-Dimethyl-3,4'-diaminodiphenyl,
1,8-Diaminonaphthalin,
1,5-Diaminonaphthalin,
p-Terphenyl-4,4''-diamin,p-Terphenyl-3,3''-diamin,
5-tert.-Butyl-2,4-toluylendiamin,
3-tert.-Butyl-2,6-toluylendiamin,
3,5-Diethyl-2,4-toluylendiamin,
3,5-Diethyl-2,6-toluylendiamin,
Alkyliso-propyl-toluylendiamine wie Diisoproyltoluylendiamin,
α,ω-Diamino-(polyphenylensulfid)e,
m-Xylylendiamin,
p-Xylylendiamin,
Bis-4,4'-[(2,6-diisopropyl)aminophenyl]methan,
Bis-4,4'-[(2-methyl-6-isopropyl)aminophenyl]methan,
Bis-4,4'-[(2,6-dimethyl)aminophenyl]methan,
Bis-4,4'-[(2,6-diisopropyl)aminophenyl]ether,
Bis-4,4'[(2-methyl-6-isopropyl)aminophenyl]ether oder
Bis-4,4'-[(2,6-dimethyl)aminophenyl]ether.

Weiterhin kommen als Polyamine Tetraamine wie 3,3',4,4'-Tetraaminobiphenyl, 3,3',4,4'-Tetraaminodiphenylmethan, 3,3',4,4'-Tetraaminodiphenylether, 3,3',4,4'-Tetraaminodiphenylsulfon oder 3,3',4,4'-Tetraaminodiphenylsulfid in Betracht. Solche Tetraamine ergeben als Endstruktur Polyarylenbenzindazole.

Eine weitere wichtige Gruppe von Diaminen sind aromatische Mehrkernverbindungen die über Benzanilidgruppen verbunden sind, wie z. B. 3,3'-Diaminobenzanilid, 3,4'-Diaminobenzanilid, 4,3'-Diaminobenzanilid, 4,4'-Diaminobenzanilid oder 4,3'-Diaminobenzanilid und die N-Alkylsubstitutionsprodukte dieser Anilide, sowie die α,ω-Polyaniliddiamine nach EP-A 271736.

Ziel sind Polyimide mit bestmöglichen Eigenschaftskombinationen. Diese werden durch eine vollaromatische Struktur erhalten. Die erfindungsgemäßen Polyimide werden deshalb bevorzugt mit rein aromatischen Diaminen hergestellt.

Obwohl nicht rein aromatische Diamine die Thermostabilität der Endprodukte in der Regel verschlechtern, können zur Einstellung spezieller Eigenschaften wie z. B. Oberflächenglätte, Elastizität u. a. jedoch auch cycloaliphatische, heterocyklische und aliphatische Aminverbindungen mit einer Aminfunktionalität größer als 1, bevorzugt gleich 2 oder größer verwendet oder mitverwendet werden.

Das sind zum Beispiel: Diamino-(dimethyl-)-dicyklohexyl-methan, Diamino-(dimethyl-diisopropyl-)-dicyklohexyl-methan, Diamino-(tetraisopropyl-)-dicyklohexyl-methan, Diamino-(diisopropyl-)-dicyklohexyl-methan, Diaminoalkylene oder Diaminopolyoxyalkylene.

Der Begriff "Diamine" soll auch Verbindungen umfassen, die das Strukturelement N-N enthalten, d. h. Abkömmlinge des Hydrazins.

Wichtig sind auch aromatische Diamine die am Kern weiter mit reaktionsfähigen Gruppen substituiert sind. Solche reaktionsfähigen Substituenten sind z. B. Carboxyl-, Hydroxyl- und Amin- und Amidgruppen. Mit solchen substituierten Aminen werden dann auch Polyheterocyklen mit nichtimidischer Struktur gebildet. Im Falle der o-Carbonsäureamidamine, wie z. B. des Anthranilsäureamids, ergeben sich als Endstruktur Polyisoindolochinazolindione. Mit Dihydroxydiaminen Polybenzoxazole, mit Tetraaminen Polyarylenbenzimidazole. Die vorliegende Erfindung schließt auch solche Polymere ein.

Weiter ist es auch erfindungsgemäß, Salze und Teilsalze der Amine zu verwenden oder mitzuverwenden, z. B. die Carbonate, Acetate, Trifluoracetate, Trichloracetate, Formiate, Oxalate, Maleinate, Methansulfonate, Benzolsulfonate, Chloride u. a.. Es hat sich gezeigt, daß die Verwendung solcher Salze die starke Verfärbung besonders der aromatischen Diamine unterdrückt und bei einigen Kombinationen glattere Filme ergibt.

Die aufgeführten Ausgangsstoffe sind bekannt oder können nach an sich bekannten Verfahren hergestellt werden.
Die Liste der Ausgangsstoffe ist nur beispielhaft, die Erfindung ist nicht auf die Verwendung dieser Stoffe eingeschränkt.

Als Komponenten B) kommen Amide oder Gemische von Estern und Amiden von Tetracarbonsäuren in Betracht.

Die Tetracarbonsäurederivate können durch die allgemeine Formel I beschrieben werden: 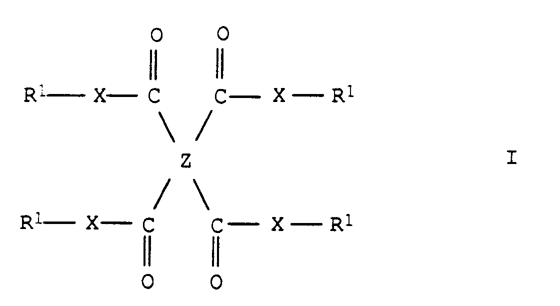
X kann darin -O-, -NH- oder -NR¹- bedeuten.

Z ist ein tetravalenter, aromatischer oder teilaromatischer, gegebenenfalls auch heterocyclisch modifizierter Rest, oder gegebenenfalls auch ein aliphatischer oder cycloaliphatischer Rest, der auch teil- oder vollständig halogenierte Strukturelemente umfassen kann.

R¹ steht für einen Alkylrest mit 1 bis 20 C-Atomen wie Methyl, Ethyl, Propyl-, Isopropyl-, n-Butyl-, iso-Butyl, Pentyl-, Hexyl- oder Heptyl- und deren Isomere, Octyl-, 2-Ethylhexyl- und weitere höhere Homologe, sowie für Cycloalkylreste wie bevorzugt Cyclohexyl oder Methylcyclohexyl-, für Alkoxyphenyl, bevorzugt Phenoxybutyl, Phenoxypropyl und Phenoxyethyl, für Arylreste wie Phenyl, Benzyl, Cumyl oder Kresyl sowie für Wasserstoff. Besonders bevorzugt steht R¹ für Ethyl-, Propyl-, Isopropyl-, n-Butyl- sowie die genannten Alkoxyphenylreste.

Bevorzugt sind Diamide oder Diester, d. h., R¹ kann gleichzeitig für Wasserstoff sowie für die anderen genannten Reste stehen. Die Diamide oder Diester können symmetrisch oder unsymmetrisch sein.

Weiterhin können als Tetracarbonsäurederivate B) auch Verbindungen der allgemeinen Formel II eingesetzt werden: 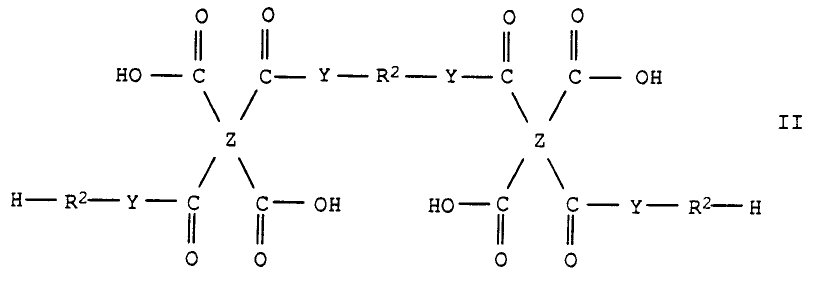
Darin bedeutet Y -O-, -NH- oder -NR-, wobei -R- die gleiche Bedeutung wie R² hat.

R² steht für einen divalenten Alkyl- oder Alkoxyalkylrest mit 2 bis 6 C-Atomen.

Es können auch beliebige Mischungen von Verbindungen der Formeln I und II verwendet werden.

Als zugrundeliegende Tetracarbonsäuren, von denen sich der Rest Z ableitet kommen die im folgenden genannte Tetracarbonsäuren in Betracht.

Bevorzugt sind aromatische oder teilaromatische Tetracarbonsäuren wie Pyromellithsäure,
Benzol-1,2,3,4-tetracarbonsäure,
3,3',4,4'-Biphenyltetracarbonsäure,
2,2',4,4'-Biphenyltetracarbonsäure,
2,3,3',4'-Biphenyltetracarbonsäure,
2,2',3,3'-Benzophenontetracarbonsäure,
2,3,3',4'-Benzophenontetracarbonsäure,
2,3,6,7-Naphthalintetracarbonsäure,
1,2,5,6-Naphthalintetracarbonsäure,
1,2,4,5-Naphthalintetracarbonsäure,
1,4,5,8-Naphthalintetracarbonsäure,
1,2,6,7-Naphthalintetracarbonsäure,
2,6-Dichlornaphthalin-1,4,5,8-tetracarbonsäure,
2,7-Dichlornaphthalin-1,4,5,8-tetracarbonsäure,
2,3,6,7-Tetrachlornaphthalin-1,4,5,8-tetracarbonsäure,
1,4,5,8-Tetrachlornaphthalin-2,3,6,7-tetracarbonsäure,
4,8-Dimethyl-1,2,3,5,6,7-hexahydronaphtalin-1,2,5,6-tetracarbonsäure,
4,8-Dimethyl-1,2,3,5,6,7-hexahydronaphthalin-2,3,6,7-tetracarbonsäure,
4,4'-Oxydiphthalsäure,
3,3'-Oxydiphthalsäure,
4,4'-Sulfonyldiphthalsäure,
4,4'-Thiodiphthalsäure,
3,3'-Thiodiphthalsäure,
4,4'-Acetylidendiphthalsäure,
Bis(2,3-dicarboxyphenyl)methan,
Bis(3,4-dicarboxyphenyl)methan,
1,1-Bis(2,3-dicarboxyphenyl)ethan,
1,1-Bis(3,4-dicarboxyphenyl)ethan,
2,2-Bis(2,3-dicarboxyphenyl)propan,
2,2-Bis(3,4-dicarboxyphenyl)propan,
Phenanthren-1,2,7,8-tetracarbonsäure,
Phenanthren-1,2,6,7-tetracarbonsäure,
Phenanthren-1,2,9,10-tetracarbonsäure,
2,3,9,10-Perylentetracarbonsäure,
3,4,9,10-Perylentetracarbaonsäure,
2,3,8,9-Perylentetracarbonsäure,
4,5,10,11-Perylentetracarbonsäure,
3,3'',4,4''-p-Terphenyltetracarbonsäure,
2,2'',3,3''-p-Terphenyltetracarbonsäure oder
2,3,3'',4''-p-Terphenyltetracarbonsäure.

Weiterhin geeignet sind Butan-1,2,3,4-tetracarbonsäure, Cyklobutantetracarbonsäure, Cyklopentan-1,2,3,4-tetracarbonsäure, Pyrrolidin-2,3,4,5-tetracarbonsäure, Thiophen-2,3,4,5-tetracarbonsäure, Pyrazin-2,3,5,6-tetracarbonsäure, Tetrahydrofurantetracarbonsäure, 9-Brom-10-merkaptoanthracentetracarbonsäure, 9,10-Dimerkaptoanthracendicarbonsäure, 2,6-Endovinylencyklohexan-1,2,4,5-tetracarbonsäure oder Hexafluoroisopropyliden-2,2-bis(phthalsäureanhydrid).

Weitere in Betracht kommende Isomere und Substitutionsprodukte der genannten Polycarbonsäuren sind Halogen-, insbesondere Fluor- oder Perfluor-, und/oder Alkylsubstitutionsprodukte und Polycarbonsäuren mit Silizium.

Weiter kommen auch die Dimerisierungs- und Oligomerisierungsprodukte von Trimellithsäureanhydrid mit Alkoholen, Aminen und Isocyanaten mit einer Funktionalität >2 und speziell die 4,4-Veresterungs-, 4,4-Veretherungs- und 4,4-Amidisierungsdimere der Trimellithsäure in Betracht. Es ist auch erfindungsgemäß, die Salze oder Teilsalze der Tetracarbonsäureverbindungen zu verwenden oder mitzuverwenden, sofern diese noch freie Carboxylgruppen aufweisen, z. B. Ammoniumsalze, Salze mit leichtflüchtigen Aminen wie Mono-, Di-, Trimethylamin, Mono-, Di-, Triethylamin und andere Amine. Weiter können auch die Phosphonium und Sulfoniumsalze saurer Tetracarbonsäureverbindungen verwendet oder mitverwendet werden. Die Verwendung solcher Salze führt in der Regel zu erwünschten, niedrigeren Viskositäten bei höherem Feststoffgehalt.

Die aufgeführten Tetracarbonsäuren sind bekannt oder können nach bekannten Verfahren hergestellt werden.

Die Liste der Ausgangsstoffe ist nur beispielhaft, die Erfindung ist nicht auf die Verwendung dieser Stoffe eingeschränkt.

Die Herstellung der Tetracarbonsäureamide und -ester kann in bekannter Weise durch Umsetzung der entsprechenden Tetracarbonsäuredianhydride mit primären und/oder sekundären Monoaminen und Monoalkoholen (Verbindungen I) oder mit primären und/oder sekundären Diaminen bzw. Diolen (Verbindungen der Formel II) durchgeführt werden. Bevorzugt werden Diamide bzw. Diester durch Einsatz entsprechender molarer Mengen an Amin/Alkohol hergestellt. Es können aber auch durch Einsatz entsprechend größerer oder kleinerer Mengen an Amin/Alkohol die Mono-, Tri- oder Tetraderivate oder deren Mischungen mit den Diamiden bzw. Diestern hergestellt und verwendet werden. Dem Fachmann ist bekannt, wie er die Reaktion entsprechend steuern kann.

Die Amide bzw. Ester können getrennt oder nebeneinander hergestellt werden. Es ist auch möglich, kleinere Mengen an Wasser mitzuverwenden bzw. das entstehende Reaktionswasser nicht vollständig zu entfernen, so daß auch in Anteilen frei Tetracarbonsäuren enthalten sein können.

Erfindungsgemäß werden als Komponenten B) Amide oder Ester/Amid-Gemische verwendet. Bei Verwendung von Ester/Amid-Gemischen kann der Anteil an Amid 20 bis 80, bevorzugt 40 bis 60 mol-% betragen.

Der Aufbau der erfindungsgemäßen Vorstufen erfolgt in der Regel in geeigneten organischen Lösemitteln, bevorzugt sind polare Stoffe wie:
Formamid,
Acetamid,
N-Methylformamid,
N,N-Dimethylformamid,
N,N-Diethylformamid,
N-Methylpyrrolidon,
Dialkylacetamide wie
N,N-Dimethylacetamid oder
N,N-Diethyacetamid,
Alkylalkylendiharnstoffe wie
Dimethylethylendiharnstoff oder
Dimethylpropylendiharnstoff,
Alkylenharnstoffe wie
Ethylendiharnstoff oder
Propylendiharnstoff,
Butyrolacton,
Caprolactam
Pyrrolidon,
N-Alkylpyrrolidone wie
N-Methylpyrrolidon (NMP),
N-Aethylpyrrolidon,
N-Cyklohexylpyrrolidon oder
N-Acetylpyrrolidon, weiterhin
Dimethylsulfoxid,
Dimethylsulfon, oder
Hexamethylenphosphorsäureamid.

Diese polaren Stoffe können ganz oder teilweise durch weitere Lösemittel wie Alkohole, Ester, Ketone, Ether und cykloaliphatische Ketone, Alkohole, Ester, Amine, speziell tertiäre Amine wie Triethylamin, Wasser, Glykole, Glykolester, Glykolether und Kohlenwasserstoffe ersetzt werden. Die Lösemittelauswahl hängt von der Löslichkeit der anderen Stoffe, der gewünschten Konzentration und Viskosität ab und ist im Einzelfall eine Optimierungsaufgabe. Auch die Tetracarbonsäureverbindungen sind in einigen Fällen relativ niederviskose Flüssigkeiten, so daß es möglich ist ohne oder mit nur sehr wenig zusätzlichem Lösemittel zu arbeiten und so Polyimidlacke mit außergewöhnlich hohem Feststoffgehalt zu erzeugen.

Die erfindungsgemäßen Lösungen enthalten das Polyamin A) und die Tetracarbonsäurederivate B) vorzugsweise im Molverhältnis von 1,5 : 1 bis 1 : 1,5, besonders bevorzugt im Molverhältnis von 1 : 1.

Der Feststoffgehalt der Lösungen beträgt vorzugsweise 35 bis 60 Gew.-%. Die Viskosität liegt vorzugsweise im Bereich von 500 bis 10.000 mPa·s. Für spezielle Anwendungen können jedoch durch entsprechende Verdünnung die gewünschten Parameter beliebig eingestellt werden.

Zur Herstellung der Lösungen können Tetracarbonsäurederivate, Polyamin und Lösungsmittel in beliebiger Reihenfolge zusammengegeben werden. Zum Beispiel ist es möglich zunächst die Tetracarbonsäurederivate herzustellen und zum erhaltenen Gemisch das Diamin und gegebenenfalls weiteres Lösungsmittel zu geben. Um alle Komponenten in Lösung zu bringen wird, falls erforderlich, bei Raumtemperatur oder auch erhöhter Temperatur, z. B. zwischen 30 und 120°C, insbesondere 40-80°C, gerührt.

Die erfindungsgemäßen Lösungen können übliche Zusatzstoffe, wie Katalysatoren für die Imidbildung, Farbstoffe, Pigmente, Füllstoffe, Verlaufsmittel und viskositätsregulierende Stoffe enthalten.

Sie eignen sich als Beschichtungsmittel zur Herstellung von Überzügen auf unterschiedlichsten Substraten, z. B. Metall, Glas oder Silicium. Die Härtung der Beschichtung erfolgt vorzugsweise bei Endtemperaturen zwischen 150° und 450°C, besonders bevorzugt zwischen 300 und 400°C. Es hat sich als besonders vorteilhaft erwiesen den Härtungsprozeß mehrstufig durch stufenweises Erhöhen der Temperatur bis zur Endtemperatur durchzuführen.

Die erfindungsgemäßen Lösungen finden Anwendung bei der Beschichtung von Si-Wafern zum Aufbau elektronischer Schaltungen, Keramik und Metall zum Aufbau zusammengestellter Schaltungen, besonders zur Herstellung von Multi-Chip-Modules, zur Beschichtung von Draht, zur Beschichtung von Lichtwellenleitern aus Glas oder Quarz, zum Lackieren von Metallfolien zur Herstellung von flexiblen Leiterplatten, zur Beschichtung, Tränkung und Verklebung von geordneten und ungeordneten, flächigen und geformten Faserstoffen, zum Vergießen von elektronischen und elektrischen Schaltungen und Wicklungen, zur Herstellung von Pulvern, Fasern, freier Filme oder Formteile.

### Beispiele

Die Beispiele sollen die Erfindung verdeutlichen, ohne sie auf die angeführten Beispiele einzuschränken.

### Allgemeine Vorschrift:

Die Tetracarbonsäurerekomponente wurde zunächst mit der Aminkomponente und gegebenenfalls der Alkoholkomponente umgesetzt, danach erfolgte die Zugabe der Diaminkomponente A).

### Abkürzungen:

- BTDA: Benzophenontetracarbonsäuredianhydrid
- BTS-DE: Benzophenontetracarbonsäurediethylester
- BTS-TM: Benzophenonteracarbonsäuretetramethylester
- BAPP: 2,2-Bis[-4-aminophenoxy)phenyl]propan
- PPDA: p-Phenylendiamin
- MPG: Ethylenglykolmonophenylether
- NMP: N-Methylpyrrolidon
- DMAP: Dimethylaminopyridin
- DIPA: Dipropylamin
- DADO: 4,4'-Diaminodiphenylether
- BPDA: Biphenyltetracarbonsäuredianhydrid

Alle Einsatzstoffe wurden aus frisch geöffneten Originalflaschen kommerzieller Chemikalienlieferanten entnommen. Es wurde immer die höchste Reinheitsstufe (electronic grade, pro analysis, u.ä.) eingesetzt. Flüssige Einsatzstoffe wurden über Molekularsieb vorgetrocknet.

Die Versuche wurden in Rührkolben aus Glas mit aufgesetztem Rückflußkühler unter Reinststickstoff durchgeführt.

### Vergleichsbeispiel 1 (VG1) entspricht Beispiel 1 von US 3,347,808

23.30 g DADO 0.117 Mol (48 % Überschuß)
36.00 g Dioxan
18.00 g NMP, lösen, dazu eine Lösung von
32.50 g BTS-DE 0.079 Mol in
50.66 g Dioxan
25.33 g NMP

### Vergleichsbeispiel 2 (VG2) entspricht den Lehren von US 3,347,808

15.00 g DADO 0.079 Mol
23.17 g Dioxan
11.58 g NMP, lösen, dazu eine Lösung von
32.50 g BTS-DE 0.083 Mol (5 % Überschuß) in
53.19 g Dioxan
26.59 g NMP

### Beispiel 1 (B1) erfindungsgemäß

25.46 g BTDA 0.079 Mol
94.83 g Dioxan
47.41 g NMP unter Stickstoff rühren, dazu
13.80 g MPG 0.100 Mol
5.90 g DIPA 0.058 Mol, eine Stunde bei 90°C rühren, auf 60°C abkühlen und
15.80 g DADO einrühren, unter Rühren abkühlen lassen.

| Vergleich von | VB1 | VB2 | B1 |
|---|---|---|---|
| Aussehen | klar | klar | klar |
| Farbe | braun | braun | braun |

| | | | |
|---|---|---|---|
| Lagerstabilität(1) | Niederschlag | o.k. | o.k. |
| Feststoffgehalt berechnet | 30 % | 30 % | 30 % |
| Imid-Rückstand(2) | 21.3 % | 24.2 % | 25.4 % |
| Filmdicke max.(3) | 8 µm | 2 µm | 110 µm |
| Dornbiegetest(4) | gerissen | zerbrößelt | bestanden |

| | | | |
|---|---|---|---|
| (1) Nach 50 Tagen bei Raumtemperatur, o.k. bedeutet unverändert in Aussehen, Viskosität und Filmbildung | | | |
| (2) Einwaage 2 g auf einem Blechdeckel mit 120 mm Durchmesser, Rückstand nach 2 Std. bei 300°C unter Luft | | | |
| (3) Die Lösungen werden mit einer Rakel mit keilförmigem Spalt auf Bleche aufgerakelt, es wird mit einer Rate von 10°C/Min. auf 300°C geheizt und dann eine Stunde gehalten. Nach dem Abkühlen wird die maximale Schichtdicke gemessen, bis zu der glatte, blasenfreie Filme erhalten werden. | | | |
| (4) Die keilförmig beschichteten Bleche aus (3) werden in einem Dornbiegeprüfgerät über einen Prüfdorn mit 1 mm Durchmesser gebogen. | | | |

Der Vergleich zeigt, daß es nach US 3,347,808 nur mit einem erheblichen Überschuß an Diamin möglich ist, überhaupt zusammenhängende Filme mit geringer Schichtdicke zu erzeugen, die aber nur schlechte mechanische Eigenschaften aufweisen (VB1), diese Lösungen sind außerdem nicht lagerstabil. Wird, ebenfalls nach den Lehren dieser Schrift, ein leichter Überschuß an Tetracarbonsäurediester verwendet (VB2), so werden nur noch extrem dünne Filme mit sehr schlechten mechanischen Eigenschaften erhalten. Weiter zeigt der abweichende Imid-Rückstand bei VB1 und VB2, daß der Überschuß an Diamin bzw. Benzophenontetracarbonsäurediethylester, die wertvolle Einsatzstoffe sind, bei der Härtung verloren geht. Bei erfindungsgemäßem Vorgehen (B1) ist es im Gegensatz dazu möglich, sehr dicke, glatte Filme mit hervorragender Elastizität zu erzeugen. Der Imid-Rückstand entspricht dem errechneten Wert, d.h. es wird ein vollständiger Umsatz zu Polyimid erreicht.

Bei den Versuchen, die zu der vorliegenden Erfindung führen, zeigte sich, daß bestimmte Polyimide nicht nach dem bekannten Stand der Technik aus Lösungen monomerer Bausteine erhalten werden konnten. Das waren speziell die Polyimide, welche die in der Mikroelektronik besonders erwünschte Eigenschaftskombination von niedriger thermischer Ausdehnung, besten Elektroisoliereigenschaften und höchster Thermostabilität aufweisen. Es ist jedoch in der Mikroelektronik sehr wünschenswert eben solche Polyimide aus hochkonzentrierten, lagerstabilen Lösungen zu erzeugen, um eine verbesserte Planarisierung beim Aufbau der mikroelektronischen Schaltungen zu erzielen. Eine besonders günstige Kombination erwünschter Eigenschaften wird z.B. mit Polyimiden auf der Basis von Benzophenontetracarbonsäure, Biphenyltetracarbonsäure und p-Phenylendiamin erreicht. Lacke aus denen diese Polyimide erhalten werden können, werden deshalb von den meisten Polyimidherstellern angeboten. Es handelt sich dabei immer um relativ niederkonzentrierte Lösungen von Polyamidocarbonsäuren. Die nachfolgenden Beispiele zeigen, daß es nach der vorliegenden Erfindung möglich ist, durch die Verwendung von (Teil-)estern und (Teil-)Amiden, auch solche Polyimide aus hochkonzentrierten, lagerstabilen Lösungen herzustellen.

### Vergleichsbeispiel 3 (VB3) Polyamidocarbonsäure

1026 g NMP unter Rühren darin lösen
32.44 g PPDA (0.30 Mol), dazu unter Kühlen und kräftigem Rühren bei 5 bis 10°C, in fünf gleichen Portionen eine Mischung aus
44.13 g BPDA (0.15 Mol) und
48.33 g BTDA (0.15 Mol), ohne Kühlung weiterrühren, bis Raumtemperatur erreicht wird.
Es entsteht eine hochviskose Lösung von 10 % rechnerischem Feststoffgehalt. Bei dem Versuch, eine Lösung mit 15 % herzustellen, wurde eine solch hohe Viskosität erhalten (26200 mPa.s bei 25°C),
daß die Lösung für elektronische Anwendungen nicht mehr verarbeitbar war.

### Vergleichsbeispiel 4 (VB4) laut Stand der Technik, z.B.

US 3,347,808
114.10 g NMP
44.13 g BPDA (0.15 Mol)
0.50 g DMAP
69.10 g MPG (0.50 Mol) 30 Min. bei 120°C rühren, auf 60°C kühlen, zufügen
57.94 g BTS-TM (0.15 Mol), dazu unter kräftigem Rühren
32.44 g PPDA (0.30 Mol) und 60 Min. bei 60°C weiterrühren, abkühlen

### Beispiel 2 (B2)

93.40 g NMP unter Rühren darin suspendieren
44.13 g BPDA (0.15 Mol)
48.33 g BTDA (0.15 Mol)
69.10 g MPG (0.50 Mol)
30.30 g DIPA (0.30 Mol)
00.50 g DMAP 30 Min. bei 120°C rühren, auf 60°C abkühlen, dazu unter kräftigem Rühren
32.44 g PPDA (0.30 Mol) und 60 Min. bei 60°C weiterrühren, abkühlen.

### Beispiel 3 (B3)

125.29 g NMP unter Rühren darin lösen
29.42 g BPDA (0.10 Mol)
41.40 g MPG (0.30 Mol)
10.10 g DIPA (0.10 Mol)
00.50 g DMAP 30 Min. bei 120°C rühren, auf 60°C abkühlen,
41.43 g BTS-DE (0.10 Mol)
38.63 g BTS-TM (0.10 Mol) dazu unter kräftigem Rühren
32.44 g PPDA (0.30 Mol) und 60 Min. bei 60°C weiterrühren, abkühlen.

| Vergleich von | VB3 | VB4 | B2 | B3 |
|---|---|---|---|---|
| Aussehen | klar | klar | klar | klar |
| Farbe | braun | braun | braun | braun |
| Lagerstabilität(1) | o.k. | o.k. | o.k. | o.k. |
| Feststoffgehalt berechnet | 10.80 % | 55 % | 61 % | 57 % |
| Imid-Rückstand(2) | 9.81 % | 35.22 % | 35.80 % | 35.40 % |
| Viskosität [mPas/25°C] | 12000 | 2600 | 1980 | 2100 |
| Filmdicke max.(3) | 30 µm | 8 µm | 60 µm | 65 µm |
| Dornbiegetest (4) | bestanden | zerbrößelt | bestanden | bestanden |

| | | | | |
|---|---|---|---|---|
| (1) Nach 50 Tagen bei Raumtemperatur, o.k. bedeutet unverändert in Aussehen, Viskosität und Filmbildung | | | | |
| (2) Einwaage 2 g auf einem Blechdeckel mit 120 mm Durchmesser, Rückstand nach 2 Std. bei 300°C unter Luft | | | | |
| (3) Die Lösungen werden mit einer Rakel mit keilförmigem Spalt auf Bleche aufgerakelt, es wird mit einer Rate von 10°C/Min. auf 300°C geheizt und dann eine Stunde gehalten. Nach dem Abkühlen wird die maximale Schichtdicke gemessen, bis zu der glatte, blasenfreie Filme erhalten werden. | | | | |
| (4) Die keilförmig beschichteten Bleche aus (3) werden in einem Dornbiegeprüfgerät über einen Prüfdorn mit 1 mm Durchmesser gebogen. | | | | |

Die Beispiele VB3, VB4, B2 und B3 zeigen den großen Fortschritt der erfindungsgemäßen Ausgangsstoffe in bezug auf das Verhältnis von Viskosität zu Feststoffgehalt bei gleichzeitig hervorragendem Filmbildevermögen.

Bei der Umsetzung der Anhydride mit Hydroxylverbindungen und Aminen können auch Mono-, Tri-, und Tetraverbindungen entstehen, das hängt von der Reaktivität der Anhydride und der Hydroxylverbindungen und Amine und statistischen Parametern des gesamten Ansatzes ab und ist für die Durchführung der Erfindung unkritisch. Ebenso die Frage der Isomerie der gebildeten Tetracarbonsäureverbindungen, die abhängt von der Reaktivität der einzelnen Stoffe, deren Mischungsverhältnis und den gewählten Reaktionsbedingungen. In den Beispielen B2 und B3 ist ein leichter Überschuß von MPG enthalten, der sicherstellen soll, daß weitgehend alle Anhydridgruppen umgesetzt werden, um eine unerwünschte Polyamidocarbonsäurebildung bei Zugabe des Diamins zu vermeiden, die eine unerwünschte Viskositätserhöhung verursachen würde.

## Patentansprüche

1. Lösungen polyimidbildender Substanzen, enthaltend
A) aromatische oder teilaromatische Polyamine, und
B) Amide oder Gemische von Estern und Amiden von Tetracarbonsäuren.

2. Lösungen nach Anspruch 1, enthaltend als Komponenten B) Diester und Diamide von aromatischen oder teilaromatischen Tetracarbonsäuren.

3. Verwendung von Lösungen gemäß Anspruch 1 oder 2 zur Herstellung von Überzügen.

4. Mit einem Polyimid beschichteter Gegenstand, erhältlich unter Verwendung von Lösungen gemäß Anspruch 1 oder 2.
